# EUROPÄISCHE PATENTANMELDUNG

(11) **EP 1 265 117 A2**
(43) Veröffentlichungstag der Anmeldung: **11.12.2002**
(21) Anmeldenummer: 02011752.9
(22) Anmeldetag: 27.05.2002
(51) Int. Cl.: G05B 19/408

(54) **Offener Antriebsregler und Verfahren zur Softwaregewinnung für einen offenen Antriebsregler**

(30) Priorität: 07.06.2001 DE 10127803
(71) Anmelder: SIEMENS AKTIENGESELLSCHAFT, 80333 München (DE)
(72) Erfinder: Bölkens, Ulrich, Dr., 90403 Nürnberg (DE); Heinemann, Gerhard, Dr., 91058 Erlangen (DE); Steinlein, Georg, 95512 Neudrossenfeld (DE); Wagenpfeil, Alexander, 91341 Röttenbach (DE)

(57) **Zusammenfassung**

Es handelt sich um einen offenen Antriebsregler und um ein Verfahren zur Softwaregenerierung das die Möglichkeit zur kundenspezifischen Auswahl von Funktionsobjekten bietet, die getrennt kompiliert werden. Die kompilierten Funktionsobjekte können in Form von Bibliotheksroutinen aufbereitet werden. Basierend auf den instanziierten und kompilierten Funktionsobjekten wird die Software für den Antriebsregler generiert oder zu einem bestehenden Programmablauf online geladen. Von besonderem Vorteil ist, dass die Funktionsobjekte von einem Kunden selbst verändert werden können, beispielweise um eine kundenspezifische Funktionalität zu realisieren.

## Beschreibung

Offener Antriebsregler und Verfahren zur Softwaregewinnung für einen offenen Antriebsregler

Die Erfindung betrifft einen offenen Antriebsregler und ein Verfahren zur Softwaregenerierung für einen offenen Antriebsregler. Als Antriebsregler werden z.B. Stromrichtergereäte und deren Software für den Betrieb elektrischer bzw. hydraulischer Aktoren (z.B. Motoren) verstanden.

Aus dem Stand der Technik sind sogenannte intelligente Antriebe zur zentralen und dezentralen Automatisierung bekannt. Dabei übernehmen verschiedene Komponenten einer Anlage die Aufgaben von Prozesssteuerung und -Regelung in einer hierarchischen Struktur.

Beispielsweise kann ein Servoumrichter die entsprechenden Regelungsdaten auf direktem Weg zu einem Leitsystem melden. Wenn sich mehrere Regler in einer Station befinden, werden diese über einen Kommunikationsbus miteinander verbunden, der für direkten Datenabgleich sorgt.

Auch für spezielle Regel- und Steuerungsaufgaben, z.B. in der Druck- und Wickeltechnik, kommen intelligente Antriebe zum Einsatz. Ein intelligenter Antrieb stellt hierfür Funktionen bereit, die mit einer Bediensoftware auf die Bedürfnisse der Anwendung angepasst werden. Für diese anwendungsspezifischen Anforderungen stellt der intelligente Antrieb eine Bibliothek von verschiedenen Regelungs- und Steuerungsgliedern zur Verfügung. Es handelt sich hierbei um übliche Bausteine der allgemeinen Regelungs- und Automatisierungstechnik, Prozessregler, TechnologieRegler, Überwachungs-/Diagnosealgorithmen und Hochlaufgeber.

Aus dem Stand der Technik sind die Antriebsregler SIMODRIVE der Firma Siemens AG bekannt. Insbesondere aus der Funktionsbeschreibung "SIMODRIVE 611 digital, SIMUMERIK 840D/810D", Bestell-Nr.: 6SN1197-OAA80-OAP6, Ausgabe 10.2000. Diese Regler beinhalten Antriebsfunktionen, wie Regelung des 4-Quadranten-Stromkreises incl. Begrenzungen für Synchron- und Asynchronmotoren mit/ohne Drehzahl-/Positionserfassung, Drehzahlregelung, Betriebsmeldungen / Alarmreaktionen, Diagnosefunktionen, .

Die aus dem Stand der Technik bekannten Systeme sind insofern nachteilig, als es sich nicht um sogenannte offene Systeme handelt. Offenheit ist eine Software-Funktion, die im Bereich von Steuerungstechnik im Allgemeinen gegenwärtig bereits im Einsatz ist und dem Anwender über die werkseitig vorgegebene Basisfunktionalität hinaus eine effiziente Möglichkeit bietet, eigene spezifische Lösungen mit in das Gesamtsystem zu integrieren.

Für den Bereich der Antriebe fehlt es jedoch an solchen offenen Software-Funktionen. Vielmehr werden für diesen Bereich Software-Pakete, deren Funktionalitäten werkseitig definiert und zusammengebunden werden, angeboten. Da es sich bei diesen Software-Systemen nicht um offene Systeme handelt, ist die Verwaltung, Wartung und Pflege von kundenspezifischen Varianten mit hohem Verwaltungsaufwand (Software-Erstellung, Software-Handling, Software-Vermarktung) verbunden.

Der Erfindung liegt daher die Aufgabe zu Grunde, einen verbesserten, offenen Antriebsregler und ein verbessertes Verfahren zur Softwaregenerierung für einen offenen Antriebsregler zu schaffen.

Die der Erfindung zu Grunde liegende Aufgabe wird mit den Merkmalen der unabhängigen Ansprüche jeweils gelöst. Bevorzugte Ausführungsformen der Erfindung sind in den abhängigen Ansprüchen angegeben.

Die Erfindung erlaubt die Softwaregenerierung auf der Basis von Funktionsobjekten. Diese werden einzeln kompiliert und können in Form von Bibliotheksroutinen aufbereitet werden. Aus den einzeln kompilierten Funktionsobjekten bzw. aus den Bibliotheksroutinen wird in einem weiteren Schritt die Software für den offenen Antriebsregler generiert. Dieses Konzept kann durchgängig auf der Zentraleinheit wie auch auf den intelligenten Peripherie-Komponenten umgesetzt werden. Des weiteren werden in den Funktionsobjekten Einsprungstellen für kundenspezifische Erweiterungen angeboten.

Ein besonderer Vorteil der Erfindung liegt darin, dass OEM-Kunden die Möglichkeit zur Verfügung gestellt wird, eigene Applikationen (Funktionen oder Diagnosen) in das Basissystem additiv einzubinden. Dafür sind Anbindungen an die Regelungsinfrastruktur (z.B. Parameterbeschreibungen, Meldungen, Warnungen, Alarme, Funktionsaufrufliste, Dateifunktionen, Dokumentationserstellung, Anbindung an die Regelungshardware) vorgesehen.

Ein weiterer besonderer Vorteil der Erfindung liegt darin, dass bestehende Teilfunktionen des Basissystems weggelassen werden können und / oder durch kundenspezifische ersetzt werden können. Die Infrastruktur der weggelassenen Teilfunktionen wird dabei nicht in die generierte Software übernommen. Dies hat den Vorteil der Performance-Steigerung, insbesondere im Hinblick auf die Programmlaufzeit, und die Ressourcen-Schonung, insbesondere im Hinblick auf den erforderlichen Speicherbedarf.

Ein zusätzlicher besonderer Vorteil der Erfindung liegt in der Möglichkeit, Funktionsobjekte online von beliebigen Quellen (interne Speichermedien, externe Speichermedien (als Beispiele: CD, Internet) über die bestehenden Kommunikationsbusse laden und in den Programmablauf integrieren zu können.

Ferner erlaubt es die Erfindung Echtzeit-Applikationen zu realisieren, die von einer kundenspezifisch zuschneidbaren Bedienmöglichkeit im Rahmen eines Inbetriebnahmetools unterstützt werden.

Die Möglichkeiten eines offenen Antriebs erlauben schnelle, flexible und auf den Kunden zugeschnittene Lösungen und verkürzen auch die Time-To-Market des Grundsystems durch Entlastung des Entwicklungs-Teams von der Entwicklung kundenspezifischer Lösungen. Auf der Basis einer validierten Grundstruktur werden "Sonderentwicklungen" sowohl für den Anwender als auch für den Hersteller wirtschaftlich.

Ein weiterer Vorteil ist, dass die Möglichkeit der Entwicklung von OEM-Software-Varianten durch den Kunden selbst den Schutz und die Geheimhaltung von dessen Know How erlaubt. Ein OEM-Kunde kann dazu entsprechende Entwicklungs-Werkzeuge, -abläufe und -dokumente die herstellerseitig zur Verfügung gestellt werden, benutzen, so dass er für eine eigenständige Weiterentwicklung der Basisfunktionalität in die Lage gesetzt ist. Vorteilhaft ist dabei die Ausrichtung der zu Grunde liegenden Softwarearchitektur in funktionelle Einheiten mit standardisierten Schnittstellen, die auf Basis einer Grundfunktionalität definiert miteinander kombiniert werden können. Bestandteil eines Funktionsobjekts bzw. einer instanziierten Funktion, sind neben Algorithmen in - unter Umständen - unterschiedlichen Zeitscheiben der Funktion zugeordnete
- Parameter,
- Betriebsmeldungen, Warnungen, Alarme
- Initialisierungsroutinen,
- Testskripten,
- Inbetriebnahmemöglichkeiten.

Das Verfahren ist unabhängig von der gewählten Programmiersprachen; vorzugsweise kann eine solche Software-Architektur in einer C++ Umgebung realisiert sein.

Im Weiteren wird eine bevorzugtes Ausführungsbeispiel der Erfindung mit Bezugnahme auf die Zeichnung näher erläutert. Es zeigen:
- FIG 1: ein Flussdiagramm betreffend die Generierung eines Basissystems,
- FIG 2: ein Flussdiagramm betreffend die Generierung eines kundenspezifischen Softwaresystems,
- FIG 3: ein Blockdiagramm eines erfindungsgemäßen offenen Antriebsreglers,
- FIG 4: ein Flussdiagramm für die Generierung der Software für den offenen Antriebsregler der FIG 3.

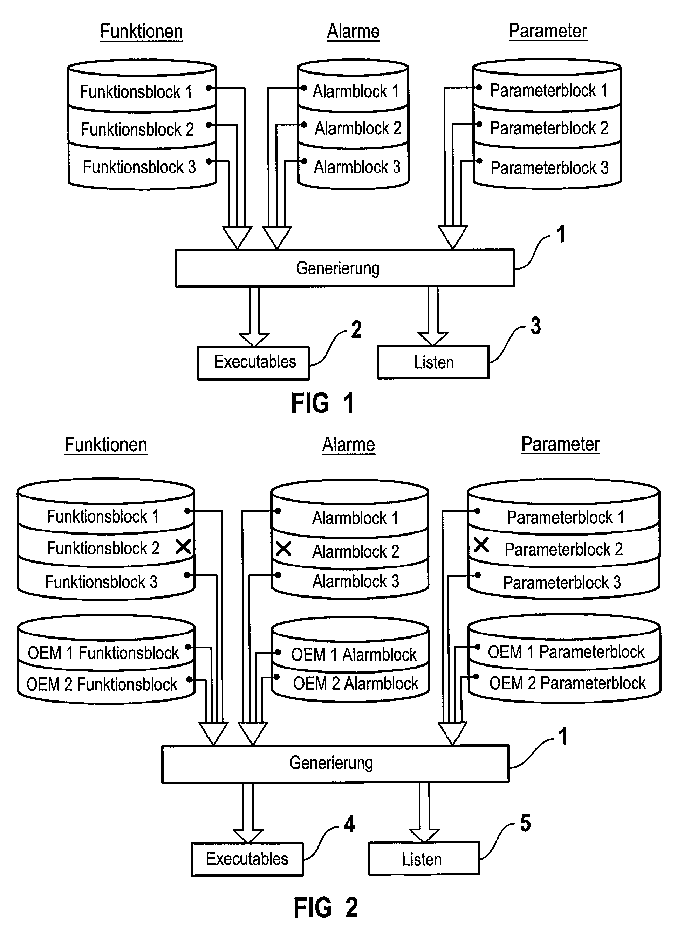

Die dem Ablauf der FIG 1 zu Grunde liegende Softwarearchitektur ist in die Bereiche Funktionen, Alarme und Parameter aufgegliedert. In dem Beispiel der FIG 1 beinhaltet der Bereich Funktionen Funktionsblock 1, Funktionsblock 2 und Funktionsblock 3. Diesen sind jeweils entsprechende Alarmblöcke 1 bis 3 bzw. Parameterblöcke 1 bis 3 zugeordnet. Zur Generierung der ausführbaren Software des Basissystems werden die entsprechenden Funktions-, Alarm- und Parameterblöcke in dem Modul 1 zusammengeführt. Das Modul 1 generiert dann einen entsprechenden ausführbaren Code 2 des Basissystems und Listen 3.

Die FIG 2 veranschaulicht die Generierung eines kundenspezifischen Systems basierend auf dem Basissystem der FIG 1. Neben den Funktions-, Alarm- und Parameterblöcken des Basissystems beinhaltet das System der FIG 2 OEM1 und OEM2 Funktions-, Alarm- und Parameterblöcke in den entsprechenden Bereichen der Softwarearchitektur. Der Funktionsblock 2, Alarmblock 2 und Parameterblock 2 des Basissystems wird durch eine Benutzer-Eingabe deselektiert. In dem Modul 1 erfolgt dann eine Zusammenführung der Funktionen Funktionsblock 1, Funktionsblock 3, OEM1 Funktionsblock und OEM2 Funktionsblock mit den entsprechenden Alarm- und Parameterblöcken.

Aus der Zusammenführung der entsprechenden Blöcke durch das Modul 1 resultiert dann kundenspezifischer Code 4 sowie entsprechende Listen 5.

Dies hat den Vorteil, dass der Kunde selbst, je nach dessen kundenspezifischen Anforderungen, bestimmte Teile des Basissystems durch von dem Kunden selbst erstellte Funktions-, Alarm- und Parameterblöcke ersetzen kann.

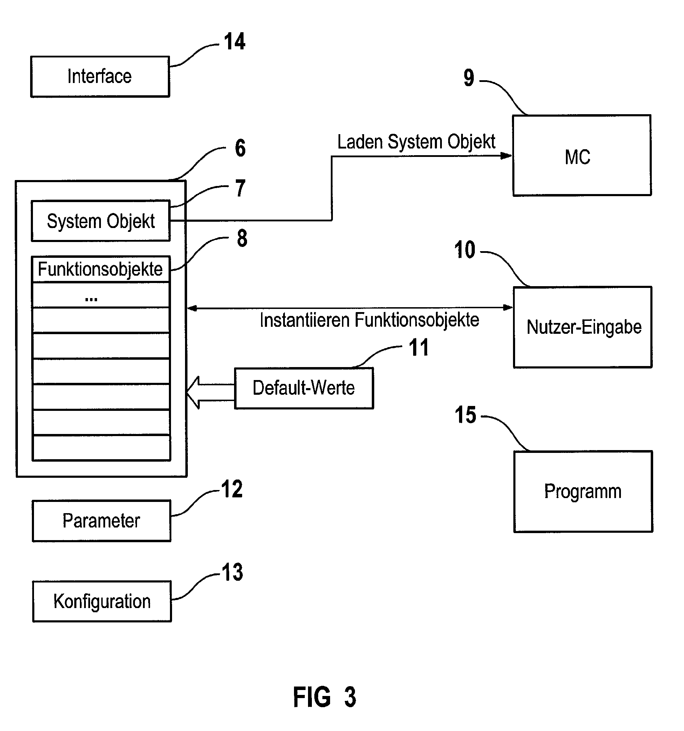

Die FIG 3 zeigt ein Blockdiagramm eines entsprechenden Antriebsreglers. Der Antriebsregler hat einen Objektspeicher 6 zur Speicherung eines Systemobjekts 7 und von Funktionsobjekten 8. Der offene Regler weist ferner einen Mikrocontroller 9 auf, der mit dem Objektspeicher 6 verbunden ist. Ferner verfügt der offene Antriebsregler über eine Nutzerschnittstelle 10 zur nutzerspezifischen Instanziierung von einem oder mehrerer der Funktionsobjekte 8. Ferner ist ein Speicher 11 zur Speicherung von Default-Werten für das Systemobjekt 7 und die Funktionsobjekte 8 vorhanden.

Ferner hat der offene Antriebsregler einen Speicher 12 zur Speicherung von Parametern und einen Speicher 13 zur Speicherung von Konfigurationsdaten. Über ein Interface 14 kann der offene Antriebsregler beispielsweise über ein Bussystem mit einer Zentraleinheit oder mit anderen offenen Antriebsreglern kommunizieren; ferner ist es auch möglich, über das Interface 14 eine Chip-Karte in den Regler einzuführen. Auf der Chip-Karte können benutzerspezifische Daten betreffend die System-Konfiguration abgelegt sein.

Das Programm des offenen Antriebsreglers ist in dem Programmspeicher 15 abgelegt.

Beim Start des offenen Antriebsreglers der FIG 3 wird zunächst das Systemobjekt 7 in den Mikrocontroller 9 geladen. Das Systemobjekt 7 nimmt dabei die Funktion eines Betriebssystems wahr. Liegen keine kundenspezifische Daten vor, so werden von dem Systemobjekt 7 die Funktionsobjekte 8 des Basissystems mit den Default-Werten des Speichers 11 instanziiert und zu einem ablauffähigen Programm zusammengebunden, welches in dem Programmspeicher 15 abgelegt und gestartet wird. Vor oder während der Instanziierung der Funktionsobjekte kann ein Nutzer über die Nutzer-Schnittstelle 10 nutzerspezifische Daten eingeben, so dass die Instanziierung der entsprechenden Funktionsobjekte 8 nutzerspezifisch erfolgen kann.

Ebenfalls kann der Nutzer nutzerspezifische Funktionsobjekte 8 in dem Objektspeicher 6 ablegen entsprechend den OEM1 und dem OEM2 Funktionsblöcken der FIG 2. Entsprechende nutzerspezifische Eingaben werden in dem Speicher 12 als Parameter bzw. als Konfigurationsdaten in dem Speicher 13 abgelegt. Bei einem erneuten Start des offenen Antriebsreglers wird dann auf diese Parameter-Werte zugegriffen, um die Funktionsobjekte 8 entsprechend nutzerspezifisch zu instanziieren.

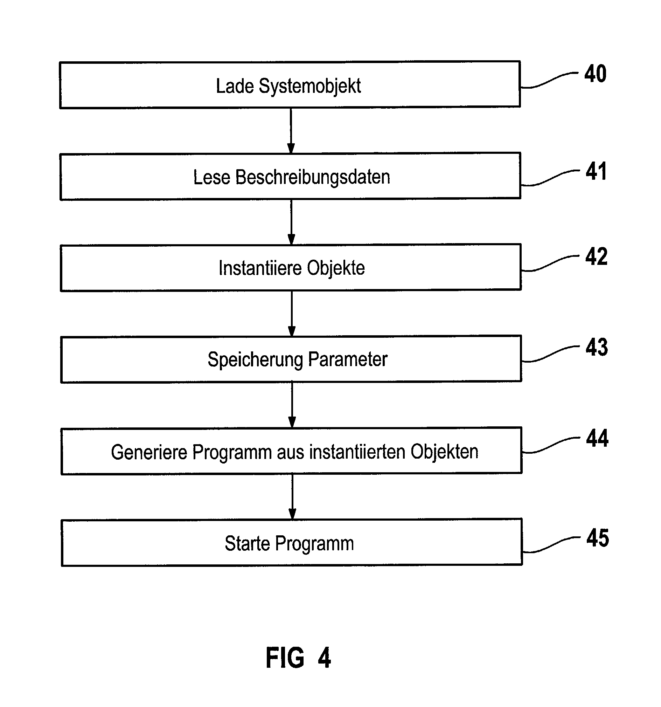

Die FIG 4 zeigt eine Ausführungsform des erfindungsgemäßen Verfahrens. In dem Schritt 40 wird zunächst das Systemobjekt in den Mikrocontroller geladen. In dem Schritt 41 werden Beschreibungsdaten hinsichtlich der Konfiguration des Systems gelesen, um das Systemobjekt zu instanziieren. In dem Schritt 42 werden die Funktionsobjekte gegebenenfalls mittels nutzerspezifischer Parameter instanziiert. Die entsprechenden Parameter werden in dem Schritt 43 gespeichert.

In dem Schritt 44 werden die instanziierten Objekte getrennt kompiliert und aus den entsprechenden Kompilaten ein ablauffähiges Programm generiert. Dieses Programm wird in dem Schritt 45 gestartet.

## Patentansprüche

1. Verfahren zur Softwaregenerierung für einen offenen Antriebsregler mit folgenden Schritten:
- Auswahl von Funktionsobjekten,
- separate Kompilierung jedes der Funktionsobjekte,
- Generierung der Software für den offenen Antriebsregler aus den kompilierten Funktionsobjekten.

2. Verfahren zur Softwaregenerierung nach Anspruch 1, bei dem Funktionsobjekte erstellt oder vorhandene Funktionsobjekte eines Basis-Systems kundenspezifisch modifiziert werden.

3. Verfahren zur Softwaregenerierung nach Anspruch 1, wobei die Funktionsobjekte entweder statisch im Rahmen einer Gesamtgenerierung oder dynamisch im Rahmen eines Nachladens in den Programmablauf eingebunden werden.

4. Verfahren zur Softwaregenerierung nach Anspruch 1, 2 oder 3, bei dem eine Parametrier-Sicht fest den Funktionsobjekten zugeordnet wird unter Nutzung der System-Infrastruktur, wie z.B. von Kommunikations- und/oder Inbetriebnahmetools.

5. Verfahren zur Softwaregenerierung nach einem der Ansprüche 1 bis 4, bei dem eine Diagnose-Sicht fest den Funktionsobjekten zugeordnet wird unter Nutzung der System-Infrastruktur, wie z.B. von Kommunikations- und/oder Inbetriebnahmetools.

6. Verfahren zur Softwaregenerierung nach einem der Ansprüche 1 bis 5, wobei die Auswahl von Funktionsobjekten durch ein Systemobjekt erfolgt.

7. Verfahren zur Softwaregenerierung nach einem der vorhergehenden Ansprüche 1 bis 6, bei dem die kompilierten Funktionsobjekte ohne erforderliche Kenntnis der benachbarten Funktionsobjekte als Bibliotheksroutinen aufbereitet und gespeichert werden.

8. Verfahren zur Softwaregenerierung nach einem der vorhergehenden Ansprüche 1 bis 7, bei dem die System-Konfiguration gespeichert wird, so dass bei einer Hinzufügung oder bei Fortfall eines Funktionsobjekts nur eine Änderung bezüglich des betreffenden Funktionsobjekts durchgeführt wird.

9. Verfahren zur Softwaregenerierung nach einem der vorhergehenden Ansprüche 1 bis 8, bei dem für die Softwaregenerierung erforderliche Daten, beispielsweise benutzerspezifische Daten, Funktionsobjekte, Parameter und / oder Konfigurationsdaten über ein Interface zur Verbindung mit einem Datenbus oder einer Chip-Karte zur Verfügung gestellt werden.

10. Computerprogrammprodukt auf einem computerlesbaren Medium, z.B. auf einer Chipkarte, mit computerlesbaren Programmmitteln zur Ausführung eines Verfahrens nach einem der vorhergehenden Ansprüche 1 bis 9, wenn das Programm von der Steuerungselektronik eines offenen Antriebsreglers ausgeführt wird.

11. Offener Antriebsregler mit einer Steuerungselektronik, die Mittel zur Ausführung eines Softwareproduktes beinhaltet, das gemäß der Schritte eines Verfahrens zur Softwaregenerierung nach einem der vorhergehenden Ansprüche 1 bis 9 erstellt wurde.
